# EUROPEAN PATENT SPECIFICATION

(11) **EP 2 310 216 B1**
(45) Date of publication and mention of the grant of the patent: **16.03.2016**
(21) Application number: 09766139.1
(22) Date of filing: 19.06.2009
(51) Int. Cl.: B60F 3/00, B60G 3/18, B60G 21/00, B62K 5/027, B62K 5/00, B62K 5/05, B62K 5/10, B62K 13/00

(54) **IMPROVEMENTS IN OR RELATING TO AMPHIBIANS**
VERBESSERUNGEN VON AMPHIBIENFAHRZEUGEN ODER DIESE BETREFFEND
AMÉLIORATIONS APPORTÉES À DES ENGINS AMPHIBIES OU SE RAPPORTANT À EUX

(30) Priority: 19.06.2008 GB 0811335
(43) Date of publication of application: 20.04.2011
(73) Proprietor: Gibbs Technologies Ltd., Warwickshire CV11 4LY (GB)
(72) Inventor: RANDLE, James, Neville, Welford on Avon CV37 8EF (GB); MUDD, Anthony, Roy, Warwickshire CV11 6GB (GB); GIBBS, Alan, Timothy, London SW11 4PL (GB)
(74) Representative: Boult Wade Tennant
(86) International application number: PCT/GB2009/001559
(87) International publication number: WO 2009/153578

(56) References cited:
- EP-A2- 1 155 950
- WO-A1-2006/043088
- WO-A1-2007/127783
- WO-A2-2008/023191

## Description

The present invention relates to a three- or four-wheeled amphibian having retractable wheel and suspension assemblies and, in particular, to a three- or four-wheeled amphibian which is capable of leaning when cornering. The present invention also relates to a retractable wheel and suspension assembly for use in a three- or four wheeled amphibian according to the present invention.

Leaning three-wheeled vehicles are known in the art and examples are provided in WO 2007/127783 and EP 1155950 (Piaggio). The latter example has two front steered wheels and one rear wheel. The two front wheels are linked by a suspension assembly that allows an inside wheel to move to a position relatively higher than the inside wheel when not cornering, and the outside wheel to move to a relatively lower location, so that both front wheels remain on the ground when cornering.

Three- and four-wheeled amphibians are known in the art and examples are disclosed in the applicant's International patent applications published under WO 2008/023191 and WO 2006/043088. In particular, document WO 2008/023191 discloses an embodiment of a three-wheeled amphibian whose body can lean inwardly into corners in a similar manner to a conventional motorcycle, see figure 37 and page 34, lines 11-18. However, this embodiment is silent about a leaning retractable suspension assembly as such. Figure 37 does not provide any technical details about the design of the suspension assembly.

The aim of the present invention is to improve handling and ease of use of a three- or four-wheeled amphibian on land. - Because bicycles and motorcycles lean into corners - that is, roll inwardly towards the apex of the corner - a rider may instinctively expect any amphibian steered by handlebars to lean inwards on corners. Conversely, an amphibian with handlebars which rolls or leans outwards on corners may unsettle the rider. The rider may therefore not enjoy riding the amphibian and may also lack confidence in the amphibian. Confidence and enjoyment may be enhanced by providing a more predictable and instinctively "right" riding experience.

The present invention provides a three- or four-wheeled amphibian for use on land and water as defined in independent claims 1, 2 and 3. Further preferred embodiments are defined in the dependent claims.

Advantageously, the present invention provides a leaning amphibian with a retractable suspension assembly which addresses the problem of how to combine a leaning suspension for use on land, with a retractable suspension which allows the amphibian to plane on water by retracting the wheels above the water line.

Where the amphibian is a planing amphibian, particularly with a vee-type hull, the amphibian will lean inwards when turning on water, as a jetski does. It is advantageous to the rider if the amphibian behaves consistently on land and on water.

A further problem found with most, if not all, amphibians is that they tend to be heavy because different components are used on land and on water, and some duplication of systems and components can occur. Conversely, any systems and components which have dual uses will help to reduce cost, weight, fuel consumption, and exhaust emissions, and through these savings, will enhance performance and handling of the amphibian, and riding pleasure for a user.

Preferably, the retraction means is pivotally-connected to the amphibian. Further preferably, the retraction means comprises a drop link pivotally-connected to the body and separately, pivotally-connected to the retraction means. The retraction means may comprise a centrally mounted drop link which is pivotally-connected to the body, and which is pivotally-connected to two retraction means, one being on each side of the drop link for a separate suspension assembly.

Preferably, the retraction means allows passive lean or user-initiated lean of said amphibian when cornering against a resistance provided by the retraction means. The retraction means may provide correction of passive or user-initiated lean through a counter force initiated by the passive or user-initiated lean. Alternatively, the retraction means may provide powered correction of passive or user-initiated lean. Preferably, the retraction means provides powered lean of said amphibian when cornering, and may provide powered correction of lean when cornering.

Preferably, the three- or four-wheeled amphibian comprises a damper operatively-connected to the upper and lower suspension arms, wherein the damper allows passive lean or user-initiated lean of said amphibian when cornering against a resistance provided by the damper. The damper may provide correction of passive or user-initiated lean through a counter force initiated by the passive or user-initiated lean. Preferably, the three- or four-wheeled amphibian comprises leaning means which provides powered correction of passive or user-initiated lean. Preferably, the three- or four-wheeled amphibian comprises leaning means which provides powered lean of said amphibian when cornering, and may provide powered correction of lean when cornering.

Preferably, the three- or four-wheeled amphibian comprises one or more sensors for detecting velocity and/or degree of turning in order to provide a correct amount of lean, and/or yaw rate to detect skids.

Most preferably, the three- or four-wheeled amphibian comprises locking means to prevent uncontrolled and/or undesirable lean of said amphibian, which acts on the suspension assembly.

The retraction-means may comprise an electrical, pneumatic or hydraulic arrangement. A single retraction means may operate the suspension assembly of both sides of said amphibian or, alternatively, a retraction means may be provided for each suspension assembly.

The one or more suspension arms, preferably, comprise two suspension arms, one upper and one lower, which contact a suspension upright at respective upper and lower locations and which suspension upright receives the wheel. The lower suspension arm may be pivotally-connected to a body of the amphibian, either directly or through other linkages.

Preferably, the retraction means is pivotally-connected to a/the body of the amphibian, either directly or through other linkages. Preferably, the retraction means is pivotally-connected to the upper suspension arm and an upright arm. Preferably, the upper and lower suspension arms are pivotally-connected to an/the upright arm, which maintains the separation distance of the arms.

The three- or four-wheeled amphibian may comprise one or more steering arms to allow the suspension assembly to be steered in use. Additionally, or alternatively, the three-or four-wheeled amphibian comprises drive means to provide drive to the front and/or rear wheels.

Preferably, the three- or four-wheeled amphibian comprises left- and right-hand steered wheels which are operably-connected so as to move together through turning and through altering orientation thereof. The left- and right-hand steered wheels may be further pivotally-mounted to the body of the amphibian through a common linkage to further accommodate for leaning of the amphibian. Alternatively, the left- and right-hand steered wheels may be further pivotally-mounted to the body of the amphibian through separate linkages to further accommodate for leaning of the amphibian.

Preferably, the rear wheel is retractable.

Preferably, the three- or four-wheeled amphibian comprises a Vee-type hull.

A three- or four-wheeled amphibian may comprise one or more leaning suspension assemblies and a Vee-type hull.

In the context of this application, passive lean and user-initiated lean are defined as being different to powered lean. In a powered system, sensors are required to detect steering amounts and/or speed of travel to determine the correct amount of lean to be applied to an amphibian when cornering. Of course, correction of the lean back to an upright condition may also be powered. Owing to the wheel arrangement, the amphibian will act in a manner very similar to a motorbike. Passive lean is a condition provided mainly by the weight of the amphibian and a tendency of the amphibian to lean more to one side than the other at rest or moving, depending upon the position of the steered wheels. When the steered wheels are straight, however, the amphibian should not lean to either side. But once the steering is turned, the weight of the amphibian will rest more on one side than the other, providing passive lean of the amphibian in the direction the steered wheels are turned. Further, a user can initiate lean by altering their position on the amphibian with respect to the seating position. Therefore, by placing one's weight more to one side, the amphibian will lean in the direction that the weight has been placed. Therefore, combining passive and user-initiated lean allows the amphibian to resemble a motorbike and to lean in to corners and turns.

Preferred embodiments of the present invention will now be described by way of example only with reference to the accompanying drawings, in which:
Figure 1 is a schematic partial-front elevation view of a three-wheeled amphibian according to a first preferred embodiment of the present invention, shown in a land mode with wheel and suspension assemblies protracted;
Figure 2 is a schematic partial-front elevation view of the amphibian of Figure 1, shown in a marine mode with wheel and suspension assemblies retracted;
Figure 3 is a schematic partial-front elevation view of the amphibian of Figure 1, shown cornering or leaning on land in a land mode;
Figure 4 is a schematic partial-front elevation view of the amphibian of Figure 1, showing operation of a suspension assembly in bump travel in a land mode;
Figure 5 is a schematic partial-plan view from above of the amphibian of Figure 1, shown in a land mode with wheel and suspension assemblies protracted;
Figure 6 is a schematic partial-front elevation view of a three-wheeled amphibian according to a second preferred embodiment of the present invention, shown in a land mode with wheel and suspension assemblies protracted;
Figure 7 is a schematic partial-front elevation view of the amphibian of Figure 6, shown in a marine mode with wheel and suspension assemblies retracted;
Figure 8 is a schematic partial-front elevation view of the amphibian of Figure 6, shown cornering or leaning on land in a land mode;
Figure 9 is a schematic partial-front elevation view of the amphibian of Figure 6, showing operation of a suspension assembly in bump travel in a land mode;
Figure 10 is a schematic partial-plan view from above of the amphibian of Figure 6, shown in a land mode with wheel and suspension assemblies protracted;
Figure 11 is a schematic partial-front elevation view of a four-wheeled amphibian according to a third preferred embodiment of the present invention, shown in a land mode with wheel and suspension assemblies protracted;
Figure 12 is a schematic partial-front elevation view of the amphibian of Figure 11, shown in a marine mode with wheel and suspension assemblies retracted;
Figure 13 is a schematic partial-front elevation view of the amphibian of Figure 11, shown cornering or leaning on land in a land mode;
Figure 14 is a schematic partial-front elevation view of the amphibian of Figure 11, showing operation of a suspension assembly in bump travel in a land mode; and
Figure 15 is a schematic partial-plan view from above of the amphibian of Figure 11, shown in a land mode with wheel and suspension assemblies protracted.

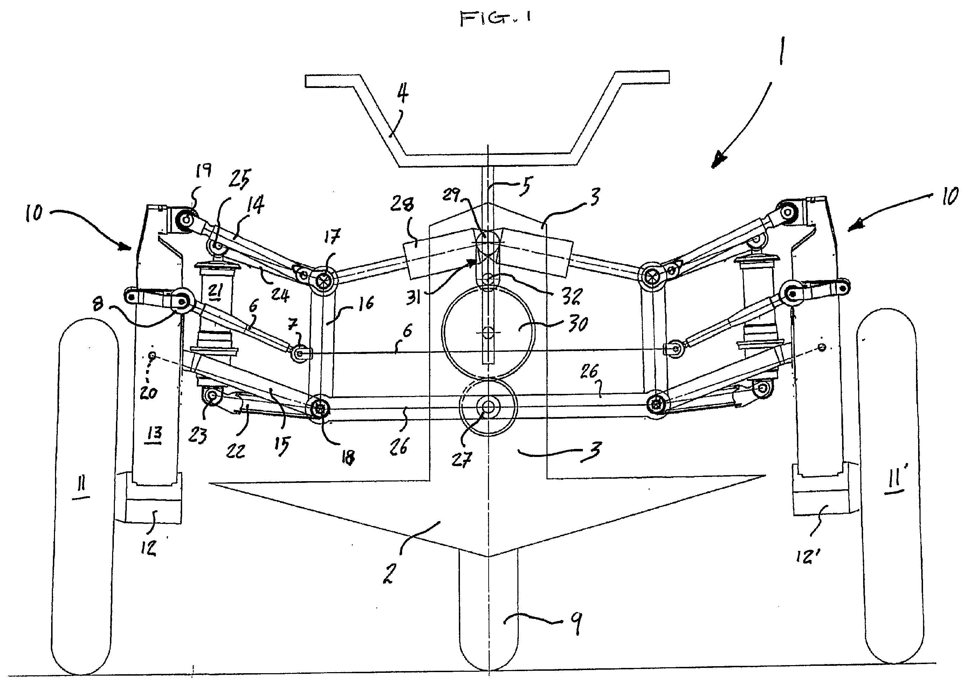

Referring first to Figures 1 to 5, there is shown a three-wheeled amphibian having a two front one rear wheel configuration, the amphibian being indicated in general by reference 1. The amphibian 1 is provided with a hull section 2 and a body 3. Handlebars 4 are provided at an upper region of the amphibian 1 and are connected to a steering column 5 which transcends downwardly towards the ground upon which the amphibian 1 is resting. A pivotally mounted steering arm 6 is connected to the steering column 5 and has pivot points 7 and 8 for connection with a suspension assembly of the present invention. A rear wheel 9 is provided.

The amphibian 1 includes a first suspension assembly 10, a corresponding second suspension assembly 10' and a wheel 11, 11' for each suspension assembly 10, 10', each wheel 11, 11' being mounted to a wheel hub mount 12, 12' of the suspension assembly 10, 10'. Both suspension assemblies 10, 10' are the same and, therefore, only suspension assembly 10 will be described in detail below. However, when referring to the second suspension assembly 10', the suffix prime will always be used for its like numbered components. The suspension assembly 10 is provided with a suspension upright 13 which is connected to upper and lower suspension arms 14, 15. The upper and lower suspension arms 14, 15 are separated at a first end by an upright arm 16. The upper suspension arm 14 includes a pivotal connection 17 and the lower suspension arm 15 includes a pivotal connection 18, which pivotal connections 17, 18 allow respective movement between the upper suspension arm 14, the lower suspension arm 15 and the upright arm 16, at each end of the upright arm 16. The upper suspension arm 14 is provided at a second end with a further pivotal connection 19 which connects the upper suspension arm with the suspension upright 13, allowing movement of the two parts 14, 13. Conversely, the lower suspension arm 15 is provided at a second end with a second pivotal connection 20, which connects that suspension arm 15 with the suspension upright 13, allowing movement of the two parts 15, 13.

A damper 21 is provided that is connected at a first lower end to one end of a lower control arm 22 through a pivotal connection 23. This damper is surrounded by a coil suspension spring (not shown). The control arm 22 is fixed to the lower suspension arm 15 at its other end. The second upper end of the damper 21 is connected to a first end of control arm 24 by a pivotal connection 25. The other end of control arm 24 is fixed to upright 16. Conversely, upper suspension arm 14, is pivotally connected to upright 16 and therefore arm 24 through a pivotal connection 17. Each wheel suspension therefore acts as a double wishbone suspension due to having parallel arms 14 and 15, but the upper ends of the spring and damper 21 are constrained to compress on bump travel by the fixing of upper arm 24 to upright 16, so that upper arm 24 cannot rotate in bump and rebound. Pivotal connections 23 and 25 include rubber bushes (not shown) to allow some relative movements due to the geometric conflicts inherent in this design.

The lower suspension arm 15 and the upright 16 are pivotally connected at pivotal connection 18 to a lower link arm 26, which is pivotally connected at 27 to the body 3 of the amphibian 1. Owing to pivotal connection 27, the suspension apparatus 10 is moveable with respect to the body of the amphibian 1, so as to allow the amphibian 1 to lean when cornering. Further, the upper suspension arm 14 and upright arm 16 are pivotally connected at 17 to a retraction ram 28, for moving the suspension apparatus 10 from its protracted land mode position to its retracted marine mode position. A second end of the retraction ram 28 is connected to a first end of a drop link 31 by a pivotal connection 29. The drop link 31 is in turn connected to the body 3 by a further pivotal connection 32 at a second end. The pivotal connection 32 connects the drop link 31 to the body 3 and allows the drop link 31 to rotate during cornering of the amphibian 1, and when displaced by the retraction rams 28, 28' when leaning.

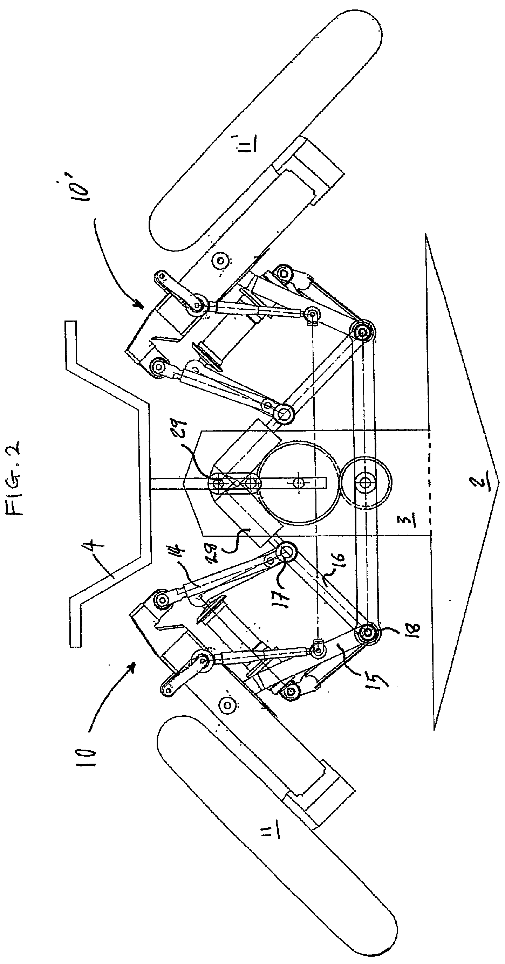

Figure 2 shows the amphibian 1 in its marine mode, with wheels retracted. Each of the suspension apparati 10, 10' have been retracted and are now raised above the hull section 2 of the amphibian 1. Owing to the arrangement of the pivotal connections between upper and lower suspension arms 14, 15 and the upright arm 16 - through pivotal connections 18 and 17 in particular - by retracting the retraction ram 28 and, therefore, by shortening the distance between the pivotal connection 17 and pivotal connection 29 on the body 3, each suspension apparatus 10, 10' has been retracted to prevent fouling of the wheels 11, 11' and/or parts of the suspension apparati 10, 10' when used on water.

Referring again generally to Figures 1 to 5, a motor and gearbox assembly 30 is attached to the body 3. Through the actions of pivotal connections 27, 29, and 32, assembly 30 allows or provides for controlled lean of the amphibian 1. In particular, such control of the amphibian 1 dictates the amount of lean when cornering and, for example, keeps the amphibian 1 upright when stationary. The motor may be an electrical, particularly a stepper motor, or a hydraulic or pneumatic motor, and is attached to the body 3. When the amphibian 1 is stationary and not in use, the gearbox assembly may lock pivots 27, 29, and 32, preventing undesired lean of the amphibian 1.

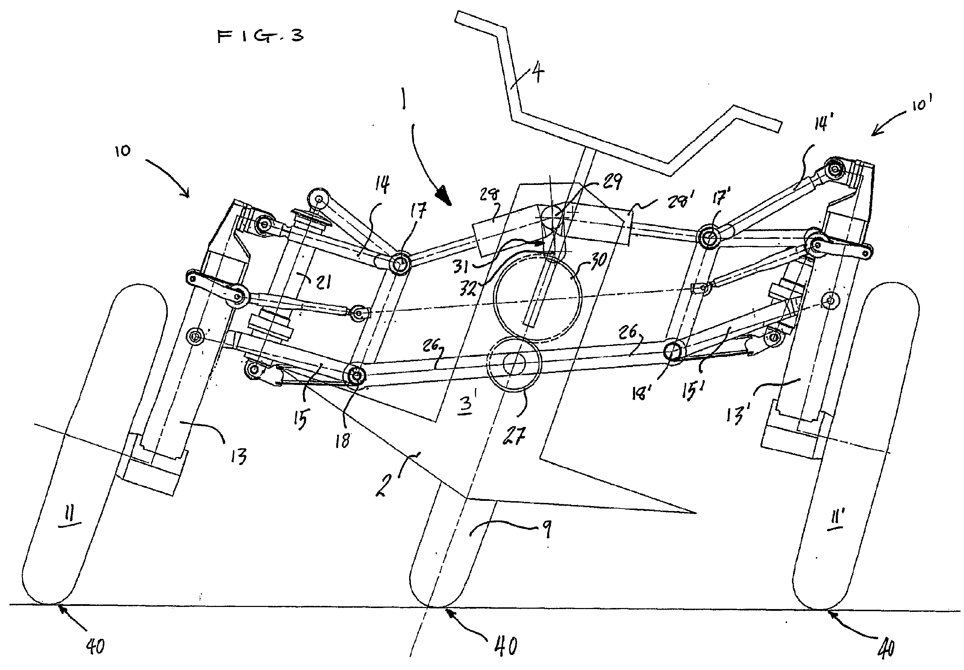

Figure 3 shows the amphibian 1 when leaning during cornering. By way of example, if the amphibian 1 is moving forward out from the page, the amphibian is turning left in Figure 3. All three wheels 11, 11', 9 alter their orientation with respect to the ground such that a more peripheral part 40 of each wheel 11, 11', 9 contacts the ground when cornering - in the same way that this occurs when cornering on a motorbike. In comparison with Figure 1, the body 3' of Figure 3 is now leant over at the same angle as the suspension uprights 13, 13'. The suspension assembly 10 is on an outside of a corner and the suspension assembly 10' is on an inside of a corner. In order to accommodate this, the link arm 26 has rotated around the pivotal connection 27 and the retraction rams 28, 28' have rotated around the pivotal connection 32 via drop link 31, to alter the orientation of the suspension assemblies 10, 10'. At the same time, on assembly 10, the suspension arms 14, 15 have rotated downwardly around the pivotal connections 17, 18 in order to allow the wheel 11 to stay on the ground. In doing this, the spring and damper 21 have been extended and the relative position of the upper suspension arm 14 with respect to the damper 21 is lowered, as can be seen from comparing Figures 1 and 3. Therefore, it will be understood that for suspension assembly 10 to be on an outside of a corner, the assembly must be able to place the wheel 11 in a relative lower position than the wheel 11 would be in, in an upright rest position of the amphibian 1. Further, on assembly 10', the suspension arms 14', 15' have rotated upwardly around the pivotal connections 17', 18' in order to allow the other wheel 11' to stay on the ground. In doing this, the spring and damper 21' have been shortened and the relative position of the upper suspension arm 14' with respect to the damper 21' is heightened, as can be seen from comparing Figures 1 and 3. Therefore, it will be understood that for suspension assembly 10' to be on an inside of a corner, the assembly 10' must be able to place the wheel 11' in a relative higher position than the wheel 11' would be in, in an upright rest position of the amphibian 1.

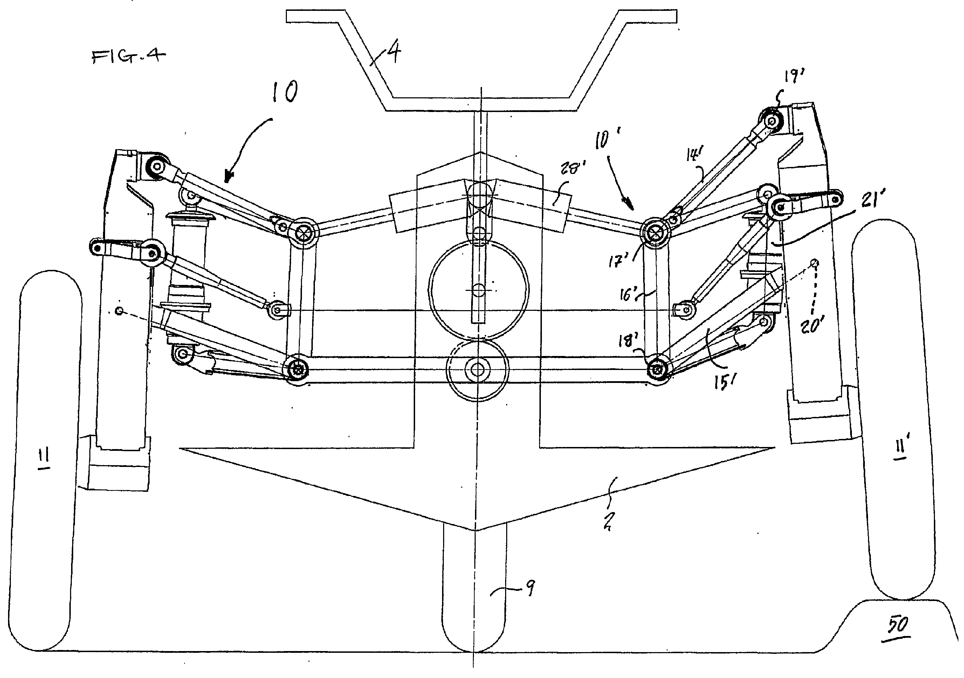

Operation of the amphibian suspension in bump travel is shown in Figure 4. The suspension assemblies 10, 10' are shown in their protracted, land-use positions. The suspension assembly 10 is shown traversing flat ground and the suspension assembly 10' is traversing a bump 50. Owing to the arrangement of the upper and lower suspension arms 14', 15' being similar to a double wishbone suspension, both suspension arms 14', 15' are raised to accommodate the bump 50. The pivotal connections 17', 18', 19', 20' allow rotation of the suspension arms 14', 15' to substantially maintain the orientation of the wheel with respect to the ground. At the same time the spring and damper 21 has been compressed.

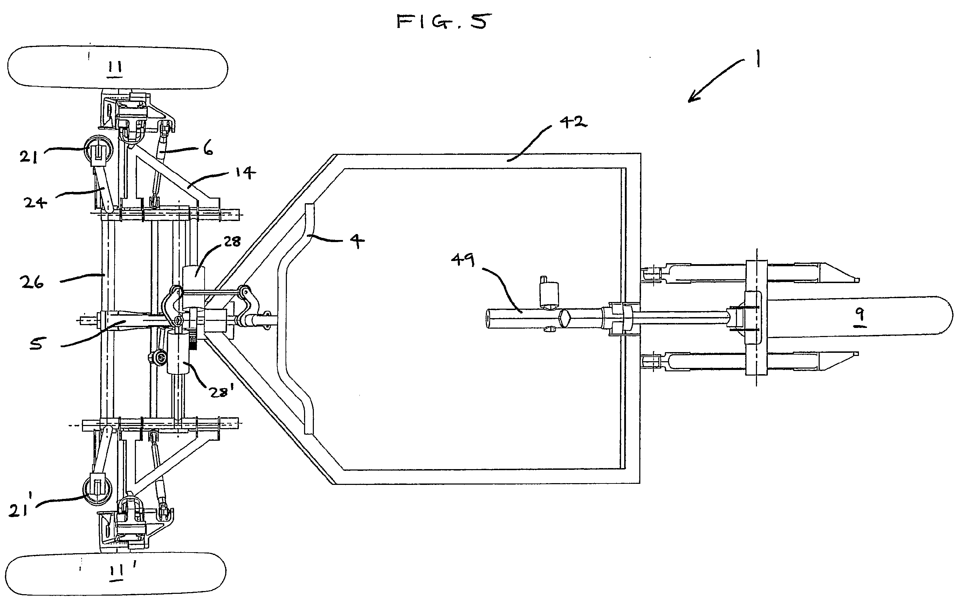

Figure 5 is a schematic partial-plan view from above of the amphibian 1, shown in a land mode with wheel and suspension assemblies protracted. This Figure illustrates the two front one rear wheel configuration, the amphibian 1 having two front wheels 11, 11' and a single rear wheel 9. A chassis frame 42 is provided, and a rear wheel retraction ram 49.

Powered lean of the amphibian 1 can be provided by suitably controlling the pivotal connections 27 and/or 29. The motor and gearbox 30 may either provide resistance to rotation of the retraction rams 28, 28' and/or link arm 26, or may power rotation of those parts. Further, the retraction rams 28, 28' themselves can be used to alter the orientation of the wheels 11, 11', 9 when cornering.

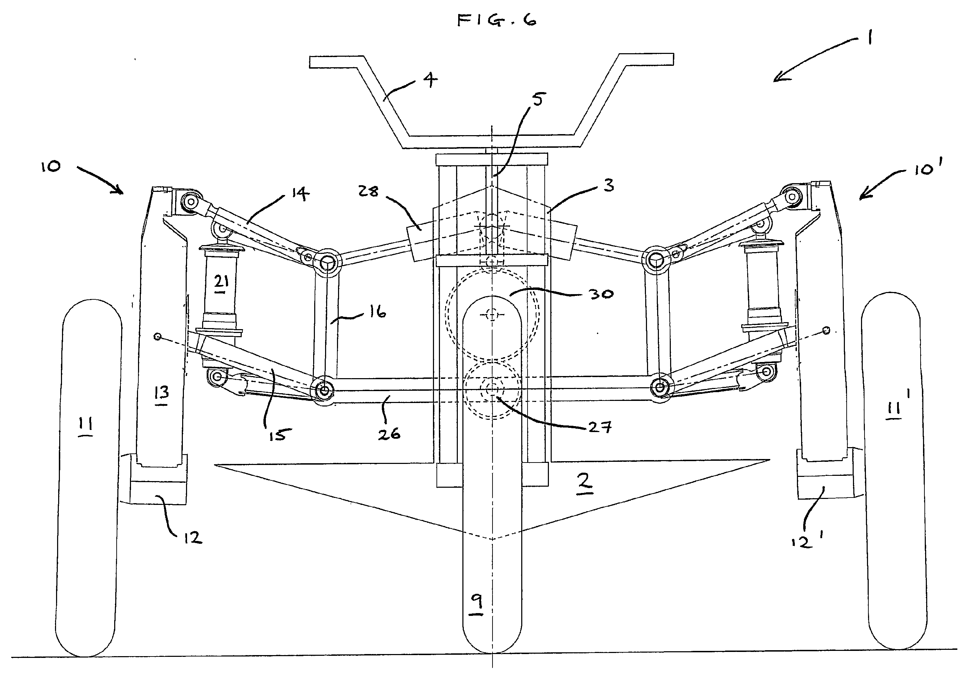

Referring next to Figures 6 to 10, there is shown a three-wheeled amphibian having a one front two rear wheel configuration, the amphibian being indicated in general by reference 1. The amphibian 1 is provided with a hull section 2 and a body 3. Handlebars 4 are provided at an upper region of the amphibian 1 and are connected to a steering column 5 which transcends downwardly towards the ground upon which the amphibian 1 is resting, and connecting with forks supporting the front wheel 9. A front wheel 9 and rear wheels 11, 11' are provided.

The amphibian 1 includes a first suspension assembly 10, a corresponding second suspension assembly 10' and a wheel 11, 11' for each suspension assembly 10, 10', each wheel 11, 11' being mounted to a wheel hub mount 12, 12' of the suspension assembly 10, 10'. Both suspension assemblies 10, 10' are the same and, therefore, only suspension assembly 10 will be described in detail below. However, when referring to the second suspension assembly 10', the suffix prime will always be used for its like numbered components. The-suspension assembly 10 is provided with a suspension upright 13 which is connected to upper and lower suspension arms 14, 15. The upper and lower suspension arms 14, 15 are separated at a first end by an upright arm 16. The upper suspension arm 14 includes a pivotal connection 17 and the lower suspension arm 15 includes a pivotal connection 18, which pivotal connections 17, 18 allow respective movement between the upper suspension arm 14, the lower suspension arm 15 and the upright arm 16, at each end of the upright arm 16. The upper suspension arm 14 is provided at a second end with a further pivotal connection 19 which connects the upper suspension arm with the suspension upright 13, allowing movement of the two parts 14, 13. Conversely, the lower suspension arm 15 is provided at a second end with a second pivotal connection 20, which connects that suspension arm 15 with the suspension upright 13, allowing movement of the two parts 15, 13.

A damper 21 is provided that is connected at a first lower end to one end of a lower control arm 22 through a pivotal connection 23. This damper is surrounded by a coil suspension spring (not shown). The control arm 22 is fixed to the lower suspension arm 15 at its other end. The second upper end of the damper 21 is connected to a first end of control arm 24 by a pivotal connection 25. The other end of control arm 24 is fixed to upright 16. Conversely, upper suspension arm 14, is pivotally connected to upright 16 and therefore arm 24 through a pivotal connection 17. Each wheel suspension therefore acts as a double wishbone suspension due to having parallel arms 14 and 15, but the upper ends of the spring and damper 21 are constrained to compress on bump travel by the fixing of upper arm 24 to upright 16, so that upper arm 24 cannot rotate in bump and rebound. Pivotal connections 23 and 25 include rubber bushes (not shown) to allow some relative movements due to the geometric conflicts inherent in this design.

The lower suspension arm 15 and the upright 16 are pivotally connected at pivotal connection 18 to a lower link arm 26, which is pivotally connected at 27 to the body 3 of the amphibian 1. Owing to pivotal connection 27, the suspension apparatus 10 is moveable with respect to the body of the amphibian 1, so as to allow the amphibian 1 to lean when cornering. Further, the upper suspension arm 14 and upright arm 16 are pivotally connected at 17 to a retraction ram 28, for moving the suspension apparatus 10 from its protracted land mode position to its retracted marine mode position. A second end of the retraction ram 28 is connected to a first end of a drop link 31 by a pivotal connection 29. The drop link 31 is in turn connected to the body 3 by a further pivotal connection 32 at a second end. The pivotal connection 32 connects the drop link 31 to the body 3 and allows the drop link 31 to rotate during cornering of the amphibian 1, and when displaced by the retraction rams 28, 28' when leaning.

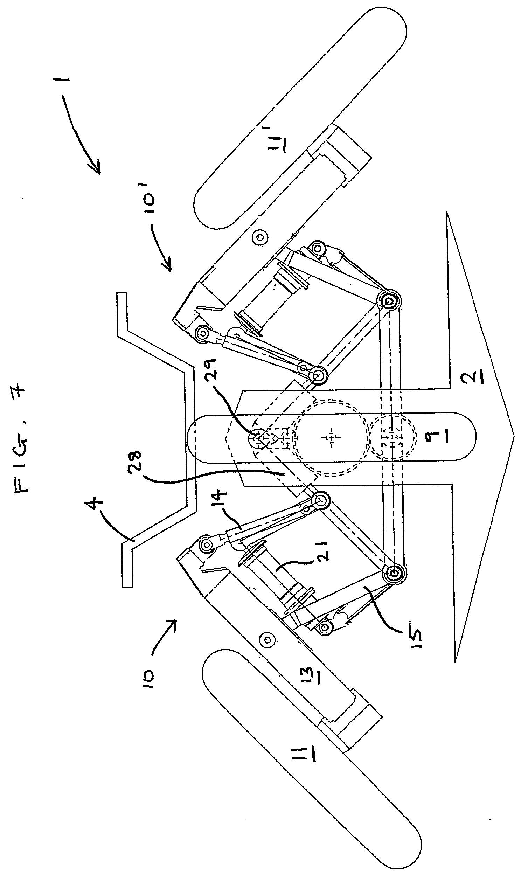

Figure 7 shows the amphibian 1 in its marine mode, with wheels retracted. Each of the suspension apparati 10, 10' have been retracted and are now raised above the hull section 2 of the amphibian 1. Owing to the arrangement of the pivotal connections between upper and lower suspension arms 14, 15 and the upright arm 16 - through pivotal connections 18 and 17 in particular - by retracting the retraction ram 28 and, therefore, by shortening the distance between the pivotal connection 17 and pivotal connection 29 on the body 3, each suspension apparatus 10, 10' has been retracted to prevent fouling of the wheels 11, 11' and/or parts of the suspension apparati 10, 10' when used on water.

Referring again generally to Figures 6 to 10, a motor and gearbox assembly 30 is attached to the body 3. Through the actions of pivotal connections 27, 29, and 32, assembly 30 allows or provides for controlled lean of the amphibian 1. In particular, such control of the amphibian 1 dictates the amount of lean when cornering and, for example, keeps the amphibian 1 upright when stationary. The motor may be an electrical, particularly a stepper motor, or a hydraulic or pneumatic motor, and is attached to the body 3. When the amphibian 1 is stationary and not in use, the gearbox assembly may lock pivots 27, 29, and 32, preventing undesired lean of the amphibian 1.

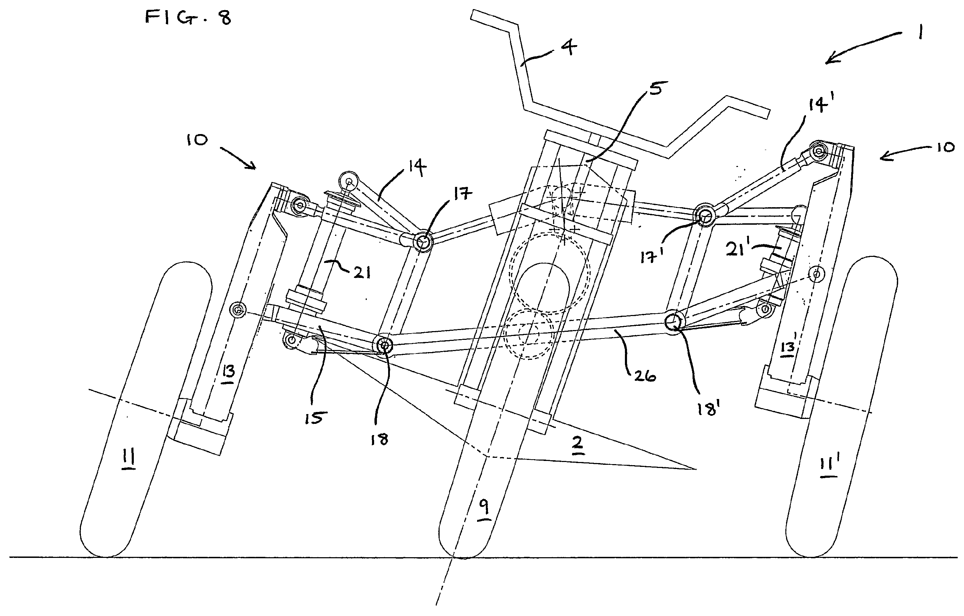

Figure 8 shows the amphibian 1 when leaning during cornering. By way of example, if the amphibian 1 is moving forward out from the page, the amphibian is turning left in Figure 3. All three wheels 11, 11', 9 alter their orientation with respect to the ground such that a more peripheral part 40 of each wheel 11, 11', 9 contacts the ground when cornering - in the same way that this occurs when cornering on a motorbike. In comparison with Figure 1, the body 3' of Figure 3 is now leant over at the same angle as the suspension uprights 13, 13'. The suspension assembly 10 is on an outside of a corner and the suspension assembly 10' is on an inside of a corner. In order to accommodate this, the link arm 26 has rotated around the pivotal connection 27 and the retraction rams 28, 28' have rotated around the pivotal connection 32 via drop link 31, to alter the orientation of the suspension assemblies 10, 10'. At the same time, on assembly 10, the suspension arms 14, 15 have rotated downwardly around the pivotal connections 17, 18 in order to allow the wheel 11 to stay on the ground. In doing this, the spring and damper 21 have been extended and the relative position of the upper suspension arm 14 with respect to the damper 21 is lowered, as can be seen from comparing Figures 1 and 3. Therefore, it will be understood that for suspension assembly 10 to be on an outside of a corner, the assembly must be able to place the wheel 11 in a relative lower position than the wheel 11 would be in, in an upright rest position of the amphibian 1. Further, on assembly 10', the suspension arms 14', 15' have rotated upwardly around the pivotal connections 17', 18' in order to allow the other wheel 11' to stay on the ground. In doing this, the spring and damper 21' have been shortened and the relative position of the upper suspension arm 14' with respect to the damper 21' is heightened, as can be seen from comparing Figures 1 and 3. Therefore, it will be understood that for suspension assembly 10' to be on an inside of a corner, the assembly 10' must be able to place the wheel 11' in a relative higher position than the wheel 11' would be in, in an upright rest position of the amphibian 1.

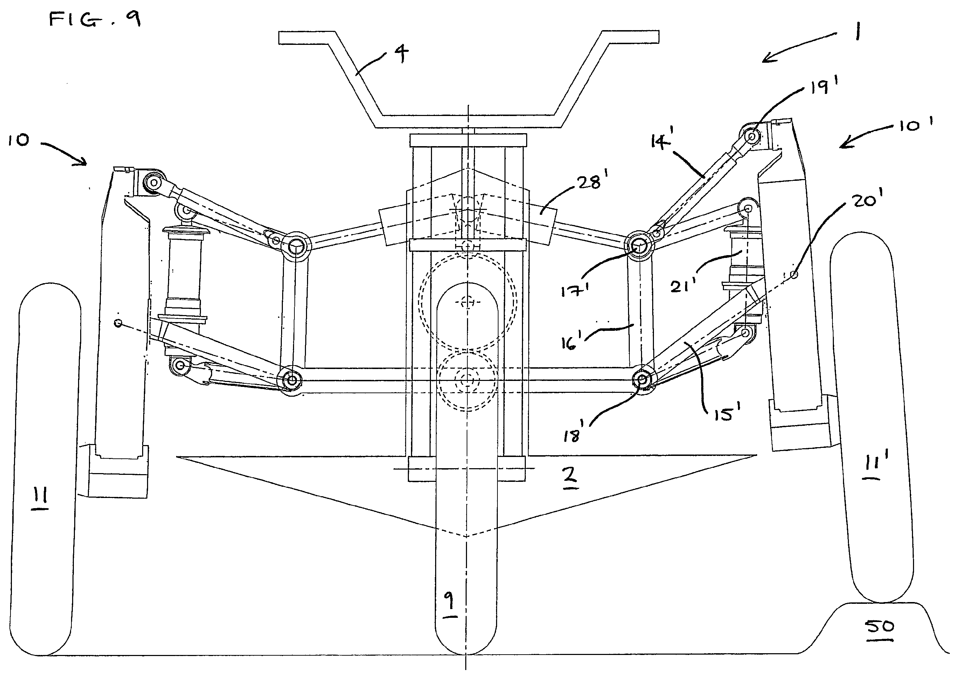

Operation of the amphibian suspension in bump travel is shown in Figure 9. The suspension assemblies 10, 10' are shown in their protracted, land-use positions. The suspension assembly 10 is shown traversing flat ground and the suspension assembly 10' is traversing a bump 50. Owing to the arrangement of the upper and lower suspension arms 14', 15' being similar to a double wishbone suspension, both suspension arms 14', 15' are raised to accommodate the bump 50. The pivotal connections 17', 18', 19', 20' allow rotation of the suspension arms 14', 15' to substantially maintain the orientation of the wheel with respect to the ground. At the same time the spring and damper 21 has been compressed.

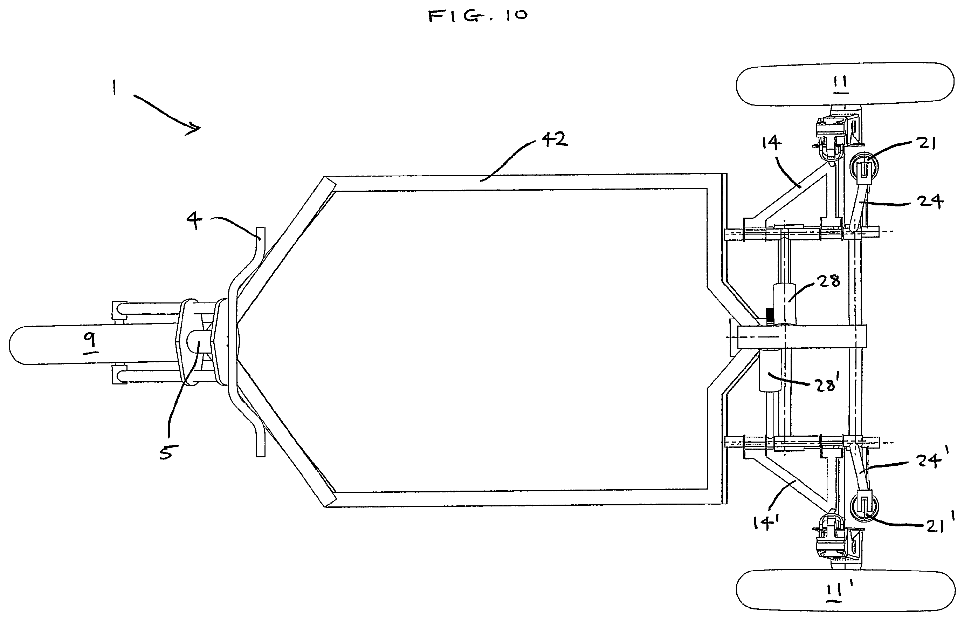

Figure 10 is a schematic partial-plan view from above of the amphibian 1 of Figures 6 to 9, shown in a land mode with wheel and suspension assemblies protracted. This Figure illustrates the one front two rear wheel configuration, the amphibian 1 having a single front wheel 9 and two rear wheels 11, 11'. A chassis frame 42 is provided, and a front wheel retraction ram (not shown) similar to the rear wheel retraction ram 49 shown in Figure 5.

Powered lean of the amphibian 1 can be provided by suitably controlling the pivotal connections 27 and/or 29. The motor and gearbox 30 may either provide resistance to rotation of the retraction rams 28, 28' and/or link arm 26, or may power rotation of those parts. Further, the retraction rams 28, 28' themselves can be used to alter the orientation of the wheels 11, 11', 9 when cornering.

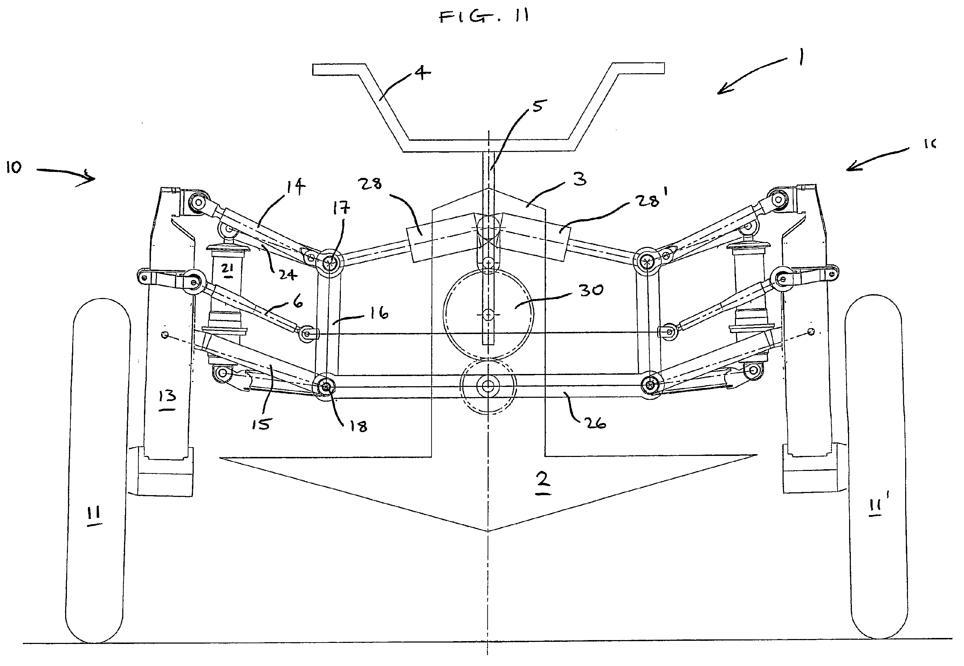

Referring next to Figures 11 to 15, there is shown a four-wheeled amphibian having a two front two rear wheel configuration, the amphibian being indicated in general by reference 1. The amphibian 1 is provided with a hull section 2 and a body 3. Handlebars 4 are provided at an upper region of the amphibian 1 and are connected to a steering column 5 which transcends downwardly towards the ground upon which the amphibian 1 is resting. A pivotally mounted steering arm 6 is connected to the steering column 5 and has pivot points 7 and 8 for connection with a suspension assembly of the present invention. Two rear wheels 9, 9' are provided. In an alternative embodiment, the amphibian 1 may have four-wheel steering and be provided with steering mechanisms at the front and rear.

The amphibian 1 includes a first suspension assembly 10, a corresponding second suspension assembly-10' and a wheel 11, 11' for each suspension assembly 10, 10', each wheel 11, 11' being mounted to a wheel hub mount 12, 12' of the suspension assembly 10, 10'. Similarly, the amphibian 1 includes third and fourth suspension assemblies 10" , 10"' and wheels 9, 9' for each suspension assembly 10" , 10"', each wheel 9, 9' being mounted to a wheel hub mount 12", 12"' of the suspension assembly 10", 10"'. Both suspension assemblies 10" , 10"' are substantially the same as suspension assemblies 10, 10' (differing only in terms of facing direction) and, therefore, only suspension assembly 10 will be described in detail below. However, when referring to the second, third and fourth suspension assemblies 10', 10" , 10"', the suffix prime(s) will always be used for its like numbered components. The suspension assembly 10 is provided with a suspension upright 13 which is connected to upper and lower suspension arms 14, 15. The upper and lower suspension arms 14, 15 are separated at a first end by an upright arm 16. The upper suspension arm 14 includes a pivotal connection 17 and the lower suspension arm 15 includes a pivotal connection 18, which pivotal connections 17, 18 allow respective movement between the upper suspension arm 14, the lower suspension arm 15 and the upright arm 16, at each end of the upright arm 16. The upper suspension arm 14 is provided at a second end with a further pivotal connection 19 which connects the upper suspension arm with the suspension upright 13, allowing movement of the two parts 14, 13. Conversely, the lower suspension arm 15 is provided at a second end with a second pivotal connection 20, which connects that suspension arm 15 with the suspension upright 13, allowing movement of the two parts 15, 13.

A damper 21 is provided that is connected at a first lower end to one end of a lower control arm 22 through a pivotal connection 23. This damper is surrounded by a coil suspension spring (not shown). The control arm 22 is fixed to the lower suspension arm 15 at its other end. The second upper end of the damper 21 is connected to a first end of control arm 24 by a pivotal connection 25. The other end of control arm 24 is fixed to upright 16. Conversely, upper suspension arm 14, is pivotally connected to upright 16 and therefore arm 24 through a pivotal connection 17. Each wheel suspension therefore acts as a double wishbone suspension due to having parallel arms 14 and 15, but the upper ends of the spring and damper 21 are constrained to compress on bump travel by the fixing of upper arm 24 to upright 16, so that upper arm 24 cannot rotate in bump and rebound. Pivotal connections 23 and 25 include rubber bushes (not shown) to allow some relative movements due to the geometric conflicts inherent in this design.

The lower suspension arm 15 and the upright 16 are pivotally connected at pivotal connection 18 to a lower link arm 26, which is pivotally connected at 27 to the body 3 of the amphibian 1. Owing to pivotal connection 27, the suspension apparatus 10 is moveable with respect to the body of the amphibian 1, so as to allow the amphibian 1 to lean when cornering. Further, the upper suspension arm 14 and upright arm 16 are pivotally connected at 17 to a retraction ram 28, for moving the suspension apparatus 10 from its protracted land mode position to its retracted marine mode position. A second end of the retraction ram 28 is connected to a first end of a drop link 31 by a pivotal connection 29. The drop link 31 is in turn connected to the body 3 by a further pivotal connection 32 at a second end. The pivotal connection 32 connects the drop link 31 to the body 3 and allows the drop link 31 to rotate during cornering of the amphibian 1, and when displaced by the retraction rams 28, 28' when leaning.

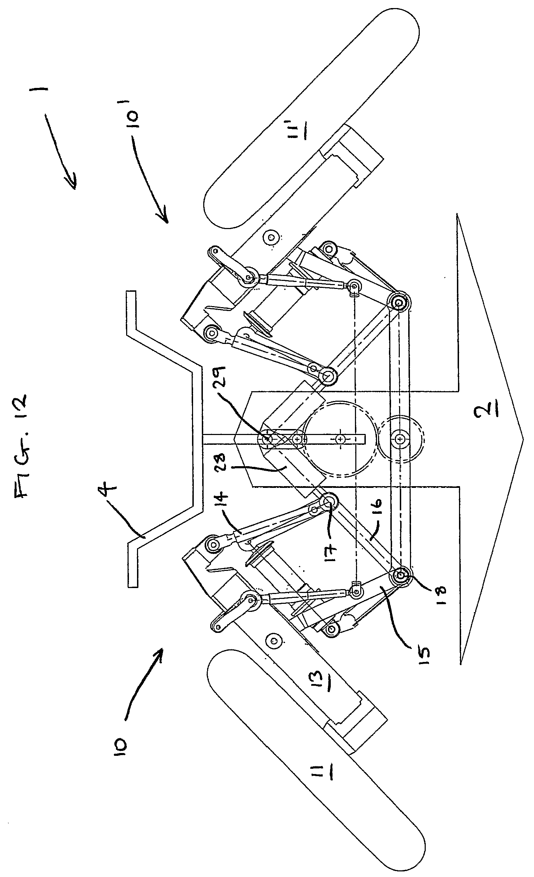

Figure 12 shows the amphibian 1 in its marine mode, with wheels retracted. Each of the suspension apparati 10, 10', 10" , 10"' have been retracted and are now raised above the hull section 2 of the amphibian 1. Owing to the arrangement of the pivotal connections between upper and lower suspension arms 14, 15 and the upright arm 16 - through pivotal connections 18 and 17 in particular - by retracting the retraction ram 28 and, therefore, by shortening the distance between the pivotal connection 17 and pivotal connection 29 on the body 3, each suspension apparatus 10, 10', 10" , 10"' has been retracted to prevent fouling of the wheel 11 and/or parts of the suspension apparatus 10 when used on water.

Referring again generally to Figures 11 to 15, a motor and gearbox assembly 30 is attached to the body 3. Through the actions of pivotal connections 27, 29, and 32, assembly 30 allows or provides for controlled lean of the amphibian 1. In particular, such control of the amphibian 1 dictates the amount of lean when cornering and, for example, keeps the amphibian 1 upright when stationary. The motor may be an electrical, particularly a stepper motor, or a hydraulic or pneumatic motor, and is attached to the body 3. When the amphibian 1 is stationary and not in use, the gearbox assembly may lock pivots 27, 29, and 32, preventing undesired lean of the amphibian 1.

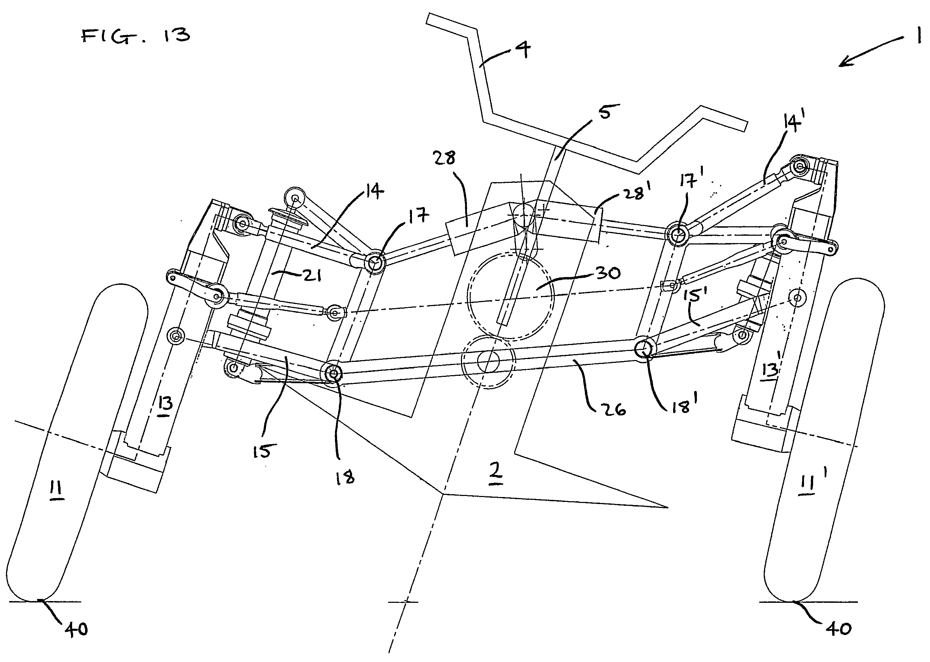

Figure 13 shows the amphibian 1 when leaning during cornering. By way of example, if the amphibian 1 is moving forward out from the page, the amphibian is turning left in Figure 3. All four wheels 11, 11', 9, 9' alter their orientation with respect to the ground such that a more peripheral part 40 of each wheel 11, 11', 9, 9' contacts the ground when cornering - in the same way that this occurs when cornering on a motorbike. In comparison with Figure 1, the body 3' of Figure 3 is now leant over at the same angle as the suspension uprights 13, 13'. The suspension assemblies 10, 10" are on an outside of a corner and the suspension assemblies 10', 10"' are on an inside of a corner. In order to accommodate this, the link arm 26 has rotated around the pivotal connection 27 and the retraction rams 28, 28' have rotated around the pivotal connection 32 via drop link 31, to alter the orientation of the suspension assemblies 10, 10', 10" , 10"'. At the same time, on assembly 10, the suspension arms 14, 15 have rotated downwardly around the pivotal connections 17, 18 in order to allow the wheel 11 to stay on the ground. In doing this, the spring and damper 21 have been extended and the relative position of the upper suspension arm 14 with respect to the damper 21 is lowered, as can be seen from comparing Figures 1 and 3. Therefore, it will be understood that for suspension assemblies 10, 10" to be on an outside of a corner, the assemblies must be able to place the wheels 11, 9 in a relative lower position than the wheels 11, 9 would be in, in an upright rest position of the amphibian 1. Further, on assemblies 10', 10"' the suspension arms 14', 15' have rotated upwardly around the pivotal connections 17', 18' in order to allow the other wheels 11', 9' to stay on the ground. In doing this, the spring and damper 21' have been shortened and the relative position of the upper suspension arm 14' with respect to the damper 21' is heightened, as can be seen from comparing Figures 1 and 3. Therefore, it will be understood that for suspension assemblies 10', 10"' to be on an inside of a corner, the assemblies 10', 10"' must be able to place the wheels 11', 9' in a relative higher position than the wheel 11', 9' would be in, in an upright rest position of the amphibian 1.

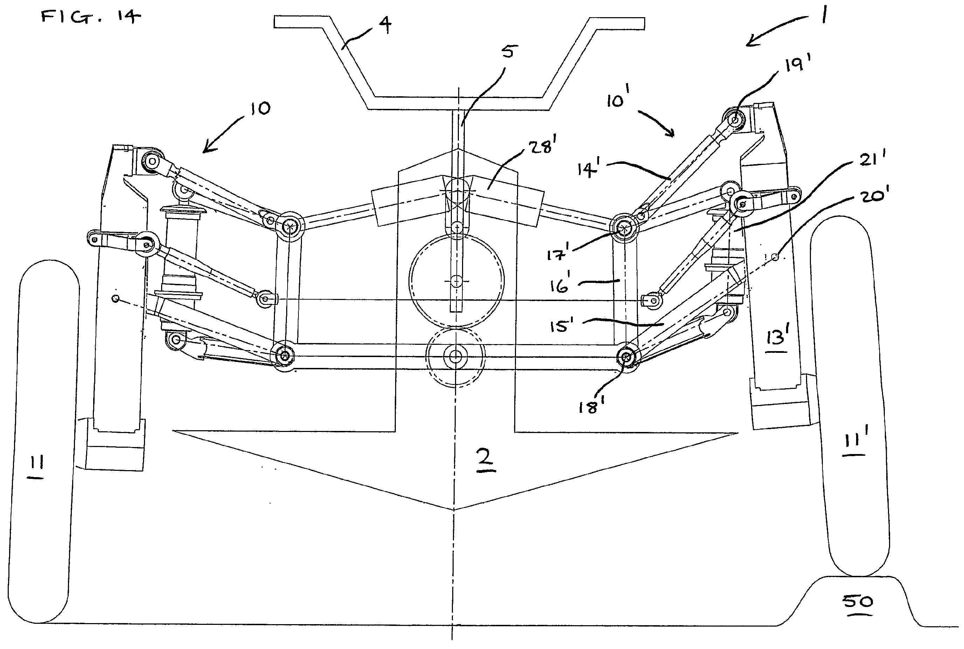

Operation of the amphibian suspension in bump and rebound is shown in Figure 14. The suspension assemblies 10, 10', 10" , 10"' are shown in their protracted, land-use positions. The suspension assembly 10 is shown traversing flat ground and the suspension assembly 10' is traversing a bump 50. Owing to the arrangement of the upper and lower suspension arms 14', 15' being similar to a double wishbone suspension, both suspension arms 14', 15' are raised to accommodate the bump 50. The pivotal connections 17', 18', 19', 20' allow rotation of the suspension arms 14', 15' to substantially maintain the orientation of the wheel with respect to the ground. At the same time the spring and damper 21 has been compressed.

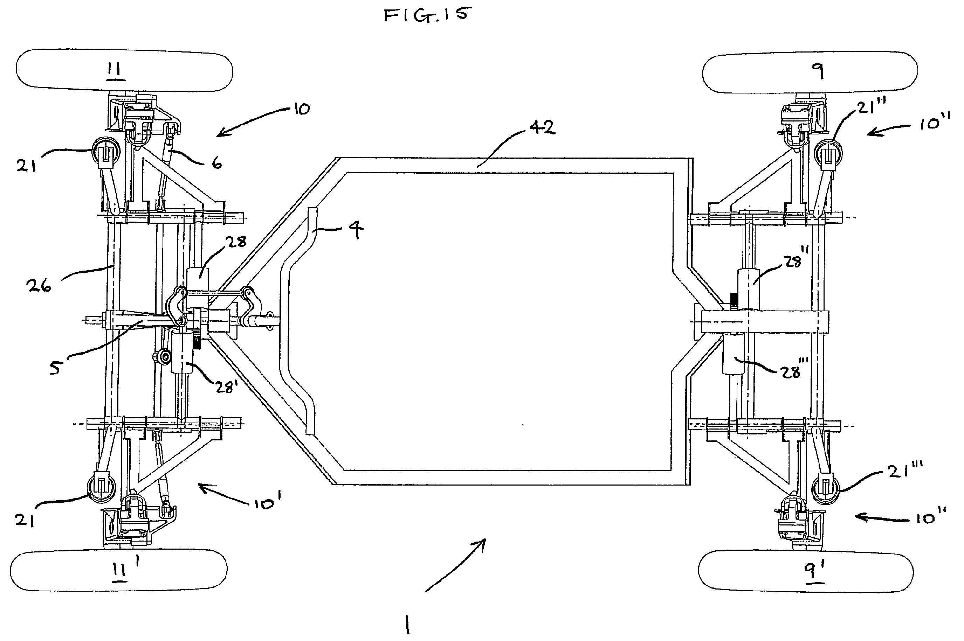

Figure 15 is a schematic partial-plan view from above of the amphibian 1 of Figures 11 to 14, shown in a land mode with wheel and suspension assemblies protracted. This Figure illustrates the two front two rear wheel configuration, the amphibian 1 having two front wheels 11, 11' and two rear wheels 9, 9'.

Powered lean of the amphibian 1 can be provided by suitably controlling the pivotal connections 27 and/or 29. The motor and gearbox 30 may either provide resistance to rotation of the retraction rams 28, 28' and/or link arm 26, or may power rotation of those parts. Further, the retraction rams 28, 28' themselves can be used to alter the orientation of the wheels 11, 11', 9, 9' when cornering.

Although the retractable leaning suspension assembly 10, 10', 10" , 10"' has been described in the context of an amphibian 1 where all three or four wheels lean, it may also be applied to a three-wheeled amphibian 1 whose single rear or front wheel does not lean, but rolls in corners as a car tyre does.

It will be noted that a vee-type hull 2 is shown in the Figures, and this is generally chosen for a planing amphibian 1 to give agile handling in marine mode. However, it will also be noted from the Figures that this hull 2 form is advantageous for a leaning amphibian 1 on land, in that ground clearance is maintained as the amphibian 1 leans, up to a lean angle corresponding at least to the vee angle of the hull 2.

Whilst the amphibian according to the present invention has been described herein as a three- or four-wheeled amphibian, this is to be taken as meaning that the amphibian has three or four wheel receiving stations, with at least one wheel provided at each wheel station. It is of course possible for a wheel provided at a wheel station to in fact comprise two or more thin wheels provided side by side.

Accordingly, whilst preferred embodiments of the present invention have been described above and illustrated in the drawings, these are by way of example only and nonlimiting. It will be appreciated by those skilled in the art that many alternatives are possible within the scope of the invention, as set out in the appended claims.

## Claims

1. An amphibian for use in land and marine modes comprising:
a planing hull (2);
three wheel stations, two of the three wheel stations being front wheel stations provided one on each side of and in the front half of the amphibian, and the third wheel station being a rear wheel station provided in the rear half of the amphibian;
at least one wheel (11, 11') provided at each wheel station, each wheel being movable between a protracted land mode position and a retracted marine mode position;
a retractable suspension assembly (10, 10') provided at each wheel station for supporting the at least one wheel, the front wheel station retractable suspension assemblies each being leaning retractable suspension assemblies configured to provide capability for leaning of the amphibian when in use in land mode;
land propulsion means to propel the amphibian on land in the land mode, the land propulsion means comprising at least one of the wheels; and
marine propulsion means to propel the amphibian on water in the marine mode.

2. An amphibian for use in land and marine modes comprising:
a planing hull (2);
three wheel stations, two of the three wheel stations being rear wheel stations provided one on each side of and in the rear half of the amphibian, and the third wheel station being a front wheel station provided in the front half of the amphibian;
at least one wheel (11, 11') provided at each wheel station, each wheel being movable between a protracted land mode position and a retracted marine mode position;
a retractable suspension assembly (10, 10') provided at each wheel station for supporting the at least one wheel, the rear wheel station retractable suspension assemblies each being leaning retractable suspension assemblies configured to provide capability for leaning of the amphibian when in use in land mode;
land propulsion means to propel the amphibian on land in the land mode, the land propulsion means comprising at least one of the wheels; and
marine propulsion means to propel the amphibian on water in the marine mode.

3. An amphibian for use in land and marine modes comprising:
a planing hull (2);
four wheel stations, two of the four wheel stations being front wheel stations provided one on each side of and in the front half of the amphibian, and two of the four wheel stations being rear wheel stations provided one on each side of and in the rear half of the amphibian;
at least one wheel (11, 11') provided at each wheel station, each wheel being movable between a protracted land mode position and a retracted marine mode position;
a retractable suspension assembly (10, 10') provided at each wheel station for supporting the at least one wheel, the wheel station retractable suspension assemblies each being leaning retractable suspension assemblies configured to provide capability for leaning of the amphibian when in use in land mode;
land propulsion means to propel the amphibian on land in the land mode, the land propulsion means comprising at least one of the wheels; and
marine propulsion means to propel the amphibian on water in the marine mode.

4. An amphibian as claimed in any one of the preceding claims further comprising retraction means (28) connected to at least one of the retractable suspension assemblies and which, in use, acts upon the at least one retractable suspension assembly to provide movement between a protracted land mode position and a retracted marine mode position of the at least one retractable suspension assembly, wherein the retraction means is movably connected to the amphibian to accommodate an alteration of orientation of the one or more leaning retractable suspension assemblies and associated wheels with respect to the ground upon which it stands when steering and/or leaning the amphibian in use.

5. An amphibian as claimed in claim 4, wherein the retraction means (28) is pivotally-connected to the amphibian.

6. An amphibian as claimed in claim 4 or claim 5, wherein the retraction means comprises a drop link (31) pivotally-connected to the body and separately, pivotally-connected to the retraction means.

7. An amphibian as claimed in any one of claims 4 to 6, wherein the retraction means allows passive lean or user-initiated lean of said amphibian when cornering against a resistance provided by the retraction means.

8. An amphibian as claimed in any one of claims 4 to 7, wherein the retraction means provides powered lean of said amphibian when cornering.

9. An amphibian as claimed in any one of the preceding claims, comprising one or more sensors for detecting velocity and/or degree of turning in order to provide a correct amount of lean, and/or yaw rate to detect skids.

10. An amphibian as claimed in any one of the preceding claims, wherein each leaning retractable suspension assembly comprises locking means to prevent uncontrolled and/or undesirable lean of said amphibian especially at low speed.

11. An amphibian as claimed in any one of claims 4 to 10, wherein the retraction means comprises an electrical, pneumatic or hydraulic arrangement.

12. An amphibian as claimed in any one of the preceding preceding claims, comprising a Vee-type hull.

## Patentansprüche

1. Amphibienfahrzeug zur Verwendung in Land- und Schiffsmodi, welches aufweist:
einen Gleitrumpf (2);
drei Radstationen, wobei zwei der drei Radstationen vordere Radstationen sind, von denen eine an jeder Seite und in der vorderen Hälfte des Amphibienfahrzeugs vorgesehen ist, und die dritte Radstation eine hintere Radstation ist, die in der hinteren Hälfte des Amphibienfahrzeugs vorgesehen ist;
zumindest ein Rad (11, 11'), das an jeder Radstation vorgesehen ist, wobei jedes Rad zwischen einer ausgefahrenen Landmodusposition und einer eingefahrenen Schiffsmodusposition beweglich ist;
eine einfahrbare Aufhängungsanordnung (10, 10'), die an jeder Radstation vorgesehen ist, um das zumindest eine Rad zu tragen, wobei die einfahrbaren Aufhängungsanordnungen der vorderen Radstation jeweils einfahrbare Neigungsaufhängungsanordnungen sind, konfiguriert, um dem Amphibienfahrzeug eine Fähigkeit zum Neigen zu geben, wenn es im Landmodus benutzt wird;
ein Landantriebsmittel zum Antreiben des Amphibienfahrzeugs auf dem Land im Landmodus, wobei das Landantriebsmittel zumindest eines der Räder aufweist; und
ein Schiffsantriebsmittel zum Antreiben des Amphibienfahrzeugs auf dem Wasser im Schiffsmodus.

2. Amphibienfahrzeug zur Verwendung in Land- und Schiffsmodi, welches aufweist:
einen Gleitrumpf (2);
drei Radstationen, wobei zwei der drei Radstationen hintere Radstationen sind, von denen eine an jeder Seite und in der hinteren Hälfte des Amphibienfahrzeugs vorgesehen ist, und die dritte Radstation eine vordere Radstation ist, die in der vorderen Hälfte des Amphibienfahrzeugs vorgesehen ist;
zumindest ein Rad (11, 11'), das an jeder Radstation vorgesehen ist, wobei jedes Rad zwischen einer ausgefahrenen Landmodusposition und einer eingefahrenen Schiffsmodusposition beweglich ist;
eine einfahrbare Aufhängungsanordnung (10, 10'), die an jeder Radstation vorgesehen ist, um das zumindest eine Rad zu tragen, wobei die einfahrbaren Aufhängungsanordnungen der hinteren Radstation jeweils einfahrbare Neigungsaufhängungsanordnungen sind, konfiguriert, um dem Amphibienfahrzeug eine Fähigkeit zum Neigen zu geben, wenn es im Landmodus benutzt wird;
ein Landantriebsmittel zum Antreiben des Amphibienfahrzeugs auf dem Land im Landmodus, wobei das Landantriebsmittel zumindest eines der Räder aufweist; und
ein Schiffsantriebsmittel zum Antreiben des Amphibienfahrzeugs auf dem Wasser im Schiffsmodus.

3. Amphibienfahrzeug zur Verwendung in Land- und Schiffsmodi, welches aufweist:
einen Gleitrumpf (2);
vier Radstationen, wobei zwei der vier Radstationen vordere Radstationen sind, von denen eine an jeder Seite und in der vorderen Hälfte des Amphibienfahrzeugs vorgesehen ist, und zwei der vier Radstationen hintere Radstationen sind, von denen eine an jeder Seite und in der hinteren Hälfte des Amphibienfahrzeugs vorgesehen ist;
zumindest ein Rad (11, 11'), das an jeder Radstation vorgesehen ist, wobei jedes Rad zwischen einer ausgefahrenen Landmodusposition und einer eingefahrenen Schiffsmodusposition beweglich ist;
eine einfahrbare Aufhängungsanordnung (10, 10'), die an jeder Radstation vorgesehen ist, um das zumindest eine Rad zu tragen, wobei die einfahrbaren Aufhängungsanordnungen der Radstation jeweils einfahrbare Neigungsaufhängungsanordnungen sind, konfiguriert, um dem Amphibienfahrzeug eine Fähigkeit zum Neigen zu geben, wenn es im Landmodus benutzt wird;
ein Landantriebsmittel zum Antreiben des Amphibienfahrzeugs auf dem Land im Landmodus, wobei das Landantriebsmittel zumindest eines der Räder aufweist; und
ein Schiffsantriebsmittel zum Antreiben des Amphibienfahrzeugs auf dem Wasser im Schiffsmodus.

4. Amphibienfahrzeug nach einem der vorhergehenden Ansprüche, das ferner ein Einfahrmittel (28) aufweist, das mit zumindest einer der einfahrbaren Aufhängungsanordnungen verbunden ist und das im Gebrauch auf die zumindest eine einfahrbare Aufhängungsanordnung wirkt, um für eine Bewegung zwischen einer ausgefahrenen Landmodusposition und einer eingefahrenen Schiffsmodusposition der zumindest einen einfahrbaren Aufhängungsanordnung zu sorgen, wobei das Einfahrmittel mit dem Amphibienfahrzeug beweglich verbunden ist, um eine Veränderung der Orientierung der einen oder mehreren einfahrbaren Neigungsaufhängungsanordnungen und zugeordnete Räder im Bezug auf den Boden, worauf es steht, aufzunehmen, wenn das Amphibienfahrzeug im Gebrauch gelenkt und/oder geneigt wird.

5. Amphibienfahrzeug nach Anspruch 4, wobei das Einfahrmittel (28) mit dem Amphibienfahrzeug schwenkbar verbunden ist.

6. Amphibienfahrzeug nach Anspruch 4 oder Anspruch 5, wobei das Einfahrmittel einen Lenkhebel (31) aufweist, der mit dem Körper schwenkbar verbunden ist und separat mit dem Einfahrmittel schwenkbar verbunden ist.

7. Amphibienfahrzeug nach einem der Ansprüche 4 bis 6, wobei das Einfahrmittel passives Neigen oder benutzerinitiiertes Neigen des Amphibienfahrzeugs gestattet, wenn es gegen einen durch das Einfahrmittel erzeugten Widerstand um eine Kurve fährt.

8. Amphibienfahrzeug nach einem der Ansprüche 4 bis 7, wobei das Einfahrmittel, beim Kurvenfahren, für ein angetriebenes Neigen des Amphibienfahrzeugs sorgt.

9. Amphibienfahrzeug nach einem der vorhergehenden Ansprüche, das einen oder mehrere Sensoren zum Erfassen der Geschwindigkeit und/oder des Drehgrads aufweist, um für einen Korrekturbetrag des Neigens und/oder der Gierrate zu sorgen, um Rutschen zu erfassen.

10. Amphibienfahrzeug nach einem der vorhergehenden Ansprüche, wobei jede einfahrbare Neigungsaufhängunsanordnung ein Arretiermittel aufweist, um unkontrolliertes und/oder unerwünschtes Neigen des Amphibienfahrzeugs, insbesondere bei niedriger Geschwindigkeit, zu verhindern.

11. Amphibienfahrzeug nach einem der Ansprüche 4 bis 10, wobei das Einfahrmittel eine elektrische, pneumatische oder hydraulische Anordnung aufweist.

12. Amphibienfahrzeug nach einem der vorhergehenden Ansprüche, das einen V-artigen Rumpf aufweist.

## Revendications

1. Engin amphibie pour une utilisation en modes terrestre et maritime comprenant :
une coque planante (2) ;
trois emplacements de roues, deux des trois emplacements de roues étant des emplacements de roues avant prévus un sur chaque côté de l'engin amphibie et dans la moitié avant de celui-ci, et le troisième emplacement de roue étant un emplacement de roue arrière prévu dans la moitié arrière de l'engin amphibie ;
au moins une roue (11, 11') prévue à chaque emplacement de roue, chaque roue étant mobile entre une position de mode terrestre déployée et une position de mode maritime rétractée ;
un ensemble de suspension rétractable (10, 10') prévu à chaque emplacement de roue pour supporter l'au moins une roue, les ensembles de suspension rétractable d'emplacements de roues avant étant chacun un ensemble de suspension rétractable à inclinaison configuré pour fournir une capacité pour l'inclinaison de l'engin amphibie lors de son utilisation en mode terrestre ;
un moyen de propulsion terrestre pour propulser l'engin amphibie sur la terre en mode terrestre, le moyen de propulsion terrestre comprenant au moins l'une des roues ; et
un moyen de propulsion maritime pour propulser l'engin amphibie sur l'eau en mode maritime.

2. Engin amphibie pour une utilisation en modes terrestre et maritime comprenant :
une coque planante (2) ;
trois emplacements de roues, deux des trois emplacements de roues étant des emplacements de roues arrière prévus un sur chaque côté de l'engin amphibie et dans la moitié arrière de celui-ci, et le troisième emplacement de roue étant un emplacement de roue avant prévu dans la moitié avant de l'engin amphibie ;
au moins une roue (11, 11') prévue à chaque emplacement de roue, chaque roue étant mobile entre une position de mode terrestre déployée et une position de mode maritime rétractée ;
un ensemble de suspension rétractable (10, 10') prévu à chaque emplacement de roue pour supporter l'au moins une roue, les ensembles de suspension rétractable d'emplacements de roues arrière étant chacun un ensemble de suspension rétractable à inclinaison configuré pour fournir une capacité pour l'inclinaison de l'engin amphibie lors de son utilisation en mode terrestre ;
un moyen de propulsion terrestre pour propulser l'engin amphibie sur la terre en mode terrestre, le moyen de propulsion terrestre comprenant au moins l'une des roues ; et
un moyen de propulsion maritime pour propulser l'engin amphibie sur l'eau en mode maritime.

3. Engin amphibie pour une utilisation en modes terrestre et maritime comprenant :
une coque planante (2) ;
quatre emplacements de roues, deux des quatre emplacements de roues étant des emplacements de roues avant prévus un sur chaque côté de l'engin amphibie et dans la moitié avant de celui-ci, et deux des quatre emplacements de roues étant des emplacements de roues arrière prévus un sur chaque côté de l'engin amphibie et dans la moitié arrière de celui-ci ;
au moins une roue (11, 11') prévue à chaque emplacement de roue, chaque roue étant mobile entre une position de mode terrestre déployée et une position de mode maritime rétractée ;
un ensemble de suspension rétractable (10, 10') prévu à chaque emplacement de roue pour supporter l'au moins une roue, les ensembles de suspension rétractable d'emplacements de roues étant chacun un ensemble de suspension rétractable à inclinaison configuré pour fournir une capacité pour l'inclinaison de l'engin amphibie lors de son utilisation en mode terrestre ;
un moyen de propulsion terrestre pour propulser l'engin amphibie sur la terre en mode terrestre, le moyen de propulsion terrestre comprenant au moins l'une des roues ; et
un moyen de propulsion maritime pour propulser l'engin amphibie sur l'eau en mode maritime.

4. Engin amphibie tel que revendiqué dans l'une quelconque des revendications précédentes, comprenant en outre un moyen de rétraction (28) relié à au moins l'un des ensembles de suspension rétractable et qui, en cours d'utilisation, agit sur l'au moins un ensemble de suspension rétractable pour assurer un déplacement entre une position de mode terrestre déployée et une position de mode maritime rétractée de l'au moins un ensemble de suspension rétractable, où le moyen de rétraction est relié de manière mobile à l'engin Engin amphibie pour recevoir une modification de l'orientation de l'ensemble ou des plusieurs ensembles de suspension rétractable à inclinaison et des roues associées par rapport au sol sur lequel il se trouve lors de la direction et/ou l'inclinaison de l'engin amphibie en cours d'utilisation.

5. Engin amphibie tel que revendiqué dans la revendication 4, dans lequel le moyen de rétraction (28) est relié en pivotement à l'engin amphibie.

6. Engin amphibie tel que revendiqué dans la revendication 4 ou 5, dans lequel le moyen de rétraction comprend une tige d'articulation (31) reliée en pivotement à la carrosserie et séparément, reliée en pivotement, au moyen de rétraction.

7. Engin amphibie tel que revendiqué dans l'une quelconque des revendications 4 à 6, dans lequel le moyen de rétraction permet une inclinaison passive ou une inclinaison initiée par l'utilisateur dudit engin amphibie en virage contre une résistance fournie par le moyen de rétraction.

8. Engin amphibie tel que revendiqué dans l'une quelconque des revendications 4 à 7, dans lequel le moyen de rétraction fournit une inclinaison entraînée dudit engin amphibie en virage.

9. Engin amphibie tel que revendiqué dans l'une quelconque des revendications précédentes, comprenant un ou plusieurs capteur(s) pour détecter la vitesse et/ou le degré de rotation afin de fournir une quantité correcte d'inclinaison, et/ou la vitesse de lacet pour détecter des dérapages.

10. Engin amphibie tel que revendiqué dans l'une quelconque des revendications précédentes, dans lequel chaque ensemble de suspension rétractable à inclinaison comprend un moyen de verrouillage pour empêcher une inclinaison incontrôlée et/ou indésirable dudit engin amphibie en particulier à faible vitesse.

11. Engin amphibie tel que revendiqué dans l'une quelconque des revendications 4 à 10, dans lequel le moyen de rétraction comprend un agencement électrique, pneumatique ou hydraulique.

12. Engin amphibie tel que revendiqué dans l'une quelconque des revendications précédentes, comprenant une coque en V.
